(19) Europäisches Patentamt
European Patent Office
Office européen des brevets

(11) Publication number: **0 089 774**
**B1**

(12) # EUROPEAN PATENT SPECIFICATION

(45) Date of publication of patent specification: **20.05.87**

(51) Int. Cl.⁴: **B 29 C 33/02,** B 29 D 23/00

(21) Application number: **83301232.1**

(22) Date of filing: **08.03.83**

(54) **A method for forming unevenness on an outer surface of a synthetic resin-coated steel pipe and an apparatus therefor.**

(30) Priority: **16.03.82 JP 40258/82**

(43) Date of publication of application:
**28.09.83 Bulletin 83/39**

(45) Publication of the grant of the patent:
**20.05.87 Bulletin 87/21**

(84) Designated Contracting States:
**BE DE FR GB NL**

(56) References cited:
**EP-A-0 021 054**
**DE-B-1 041 242**
**FR-A-2 363 416**

(73) Proprietor: **KAWASAKI STEEL CORPORATION**
**1-28, Kitahonmachi-Dori 1-Chome**
**Chuo-ku Kobe-Shi Hyogo 650 (JP)**

(72) Inventor: **Ohta, Teruo**
**159-40, Aza-Kitanakane Taketoyo-Cho**
**Chita-Gun Aichi Pref. (JP)**
Inventor: **Tamura, Toshihisa**
**167, Aza-Kitanakane Taketoyo-Cho**
**Chita-gun Aichi Pref. (JP)**
Inventor: **Ikeda, Yuji**
**85-5, Sumiyoshi-Cho 4-Chome**
**Handa City Aichi Pref. (JP)**
Inventor: **Araikawa, Mutsuya**
**5-103, Aza-Omoteyama Ohaza-Shirasawa**
**Agui-Cho Chita-Gun Aichi Pref. (JP)**
Inventor: **Kuwata, Kazuyoshi**
**46-1, Minaminagamune Taketoyo-Cho**
**Chita-Gun Aichi Pref. (JP)**

(74) Representative: **Overbury, Richard Douglas et al**
**HASELTINE LAKE & CO Hazlitt House 28**
**Southampton Buildings Chancery Lane**
**London WC2A 1AT (GB)**

**EP 0 089 774 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a method and an apparatus for treating a synthetic resin-coated steel pipe.

Synthetic resin-coated steel pipes for use, for example, on the sea bed frequently have their outer surface coated with concrete in order to reduce buoyancy or provide protection. However, conventional synthetic resin-coated steel pipes are relatively hard and smooth on their outer surface and hence the bonding strength between the synthetic resin outer surface and the concrete is low. Thus there is the risk that the concrete and the synthetic resin outer surface may separate because of external forces acting in the axial direction of the pipe.

An object of the present invention is to provide a method and apparatus for readily forming a desired unevenness on the outer surface of the synthetic resin-coated steel pipe such that the bonding strength between the pipe and a subsequently applied concrete coating is improved.

EP—A—21054 discloses a technique for producing reinforced articles of plastics material by extruding a coating of the plastics material on to the outer surface of a member. In order to compensate for the shrinkage which ordinarily occurs the coated member emanating from the extruder is immediately fed between two endless belts which, together with a conical deflector and guide rails, form a divided mould in which the volume of the coated member is reduced. One or both of the belts is profiled so as to produce a corresponding profile on the resultant reinforced article. In the embodiment described, one of the belts has a profile consisting of adjacent grooves and ridges of trapezoidal section. The member is a strip formed of high tensile material.

According to one aspect of the present invention there is provided a method of treating a synthetic resin coated member which comprises forming unevenness on the outer surface of the synthetic resin-coated member by contacting the surface with the surface of a device having alternate grooves and ridges at a temperature above the melting point of the resin characterised in that (i) the device is a heated working tool, the alternate grooves and ridges each have a rectangular section, and the member is a steel pipe and (ii) the outer surface of the pipe is coated with concrete after it has been provided with the desired unevenness.

According to another aspect of the present invention there is provided an apparatus for forming unevenness on the outer surface of a synthetic resin-coated pipe when carrying out the method as described above characterised in that said apparatus comprises

(i) three sets of heated working tools distributed uniformly about the periphery of the pipe, each having a concave surface in the form of an inner surface of a cylindrical segment and including alternate grooves and ridges each having a rectangular section,

(ii) a plurality of urging means, an urging means being flexibly connected to each working tool so that the concave surfaces of the tools are centred on the pipe and urged into contact with the outer circumferential surface of the pipe, and

(ii) a frame supporting said urging means.

For a better understanding of the invention and to show how the same may be carried out reference will now be made, by way of example, to the accompanying drawings, in which:—

Fig. 1 is a side view showing an apparatus for forming unevenness on the outer surface of the synthetic resin-coated steel pipe according to the present invention;

Fig. 2 is a cross-sectional view of the apparatus of Fig. 1 taken along line II—II;

Fig. 3 is a perspective view showing a part of the apparatus of Fig. 1 and Fig. 2;

Fig. 4 is a side view, partly sectioned, of a synthetic resin-coated steel pipe produced in accordance with the present invention; and

Fig. 5 is a graph showing the relationship between the bonding strength of the outer surface of a synthetic resin-coated steel pipe and the total surface area of the outer surface.

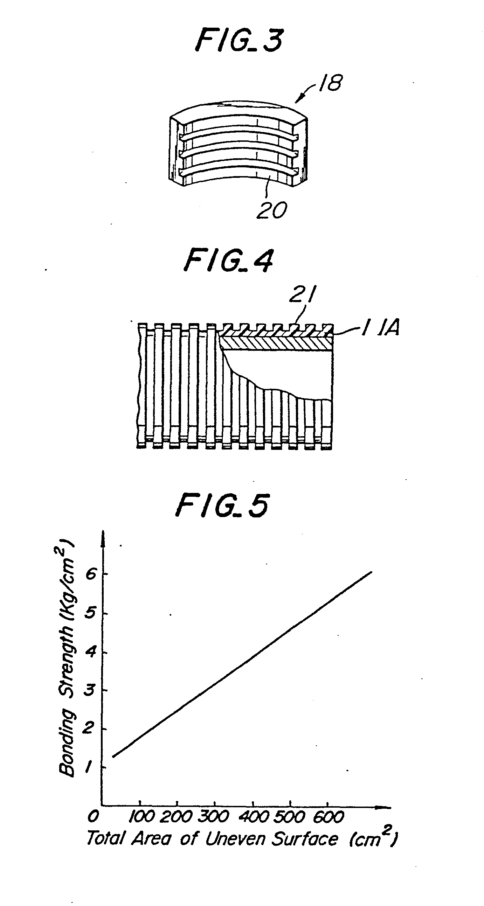

Referring now to Fig. 1 and Fig. 2, a synthetic resin-coated steel pipe 11 is held on a trolley 13 movably mounted on rails 12. A gate-like frame 14 is arranged astride the rails 12. The frame 14 supports three sets of working tools 18. Each set includes four working tools distributed longitudinally along the axis of the pipe 11 and the three sets are arranged at equal intervals around the periphery of the pipe 11. Each working tool 18 is associated with a compressing cylinder 15 supported by the frame and having a piston rod 16 oriented towards the center of the steel pipe 11 as shown in Fig. 2. Each piston rod 16 is flexibly connected to one end of a connecting member 17 by a pin and the other end of the connecting member 17 is connected to the associated working tool 18 by a pin. Each working tool 18 is supported by supporting members 19A and 19B formed of leaf springs and fixed to both sides of the connecting member 17. Each working tool 18 has a concave surface 20 forming the inner surface of a cylindrical segment and including alternate grooves and ridges which are rectangular in section (Fig. 3). The inner surface 20 of each working tool 18 is commensurate with the outer surface of the steel pipe 11. Each working tool 18 is provided with a heater to a temperature at which the synthetic resin coating layer 11A becomes molten.

Explanation will now be made with respect to the manner in which the desired unevenness may be formed on the outer surface of the synthetic resin coating layer by means of the above described apparatus.

The inner surfaces 20 having the rectangular sectioned grooves and ridges are kept at the temperature (for example 200°C—250°C) at which the synthetic resin coating layer 11A of the steel pipe 11 melts by means of the heaters housed in the working tools 18. The steel pipe 11 is moved along, together with the trolley 13, and is stopped in such a position that the outer surface of the steel pipe is opposite to the inner surfaces 20 of the working tools 18. Then, the compressing cylinders 15 are actuated so that the surfaces 20 of the working tools 18 are urged (for example, at about 2 $kg/cm^2$) into contact with the circumferential surface of the synthetic resin coating layer 11A for several seconds. After the surface of the coating layer 11A has been softened, the ridges of the surfaces 20 of the working tools are pressed into the coating layer 11A up to a given depth to partially melt the synthetic resin coating layer 11A, whereby the configuration of the surfaces 20 of the working tools 18 is transferred to the outer surfaces of the synthetic resin coating layer 11A so that it is provided with similar alternate grooves and ridges 21 of rectangular section and lying in planes which are normal to the pipe axis as shown in Fig. 4. Thereafter, when the working tools 18 are returned back to their original positions by the cylinders 15, the synthetic resin coating layer 11A having the desired unevenness is allowed to solidify.

In this embodiment, the desired unevenness can be easily formed by contacting the synthetic resin coating layer 11A of the steel pipe 11 with the surface 20 of the working tools 18 at elevated temperature. In this way the bonding strength of the synthetic resin-coated steel pipe to a concrete coating surrounding the outer surface of the pipe can be increased. Furthermore, the above described bonding strength increases in proportion to the increase of the total area of the outer surface of the pipe as shown in Fig. 5.

**Claims**

1. A method of treating a synthetic resin coated member which comprises forming unevenness on the outer surface of the synthetic resin-coated member by contacting the surface with the surface of a device having alternate grooves and ridges at a temperature above the melting point of the resin characterised in that (i) the device is a heated working tool (18), the alternate grooves and ridges each have a rectangular section, and the member is a steel pipe and (ii) the outer surface of the pipe is coated with concrete after it has been provided with the desired unevenness.

2. Apparatus for forming unevenness on the outer surface of a synthetic resin-coated pipe (11) when carrying out the method of claim 1 characterised in that said apparatus comprises

(i) three sets of heated working tools (18) distributed uniformly about the periphery of the pipe, each having a concave surface in the form of an inner surface of a cylindrical segment and including alternate grooves and ridges each having a rectangular section,

(ii) a plurality of urging means (15—17), an urging means being flexibly connected to each working tool (18) so that the concave surfaces of the tools are centered on the pipe and urged into contact with the outer circumferential surface of the pipe, and

(ii) a frame (14) supporting said urging means.

3. An apparatus as claimed in claim 2 wherein a plurality of said working tools is arranged longitudinally of the pipe.

**Patentansprüche**

1. Verfahren zur Behandlung eines mit einem synthetischen Harz beschichteten Elements, umfassend das Formen von Unebenheiten in der äußeren Oberfläche des mit einem synthetischen Harz beschichteten Elements durch Kontaktieren der Oberfläche mit einer Oberfläche einer Vorrichtung mit alternierenden Rillen und Graten bei einer Temperatur oberhalb des Schmelzpunktes des Harze, dadurch gekennzeichnet, daß

(i) die Vorrichtung ein erhitztes Arbeitswerkzeug (18) ist, die alternierenden Rillen und Grate jeweils im Schnitt rechteckig sind und das Element ein Stahlrohr ist, und

(ii) die äußere Oberfläche des Rohres, nachdem sie mit der gewünschten Unebenheit ausgestattet wurde, mit Beton überzogen wird.

2. Vorrichtung zur Formung von Unebenheiten in der äußeren Oberfläche eines mit einem synthetischen Harz beschichteten Rohres (11), bei Durchführung des Verfahrens nach Anspruch 1, dadurch gekennzeichnet, daß die Vorrichtung

(i) drei Sätze erhitzter Arbeitswerkzeuge (18), die gleichmäßig über den Umfang des Rohres verteilt sind und die jeweils eine konkave Oberfläche in Form der inneren Oberfläche eines zylindrischen Segments und alternierende Rillen und Grate mit jeweils rechteckigem Schnitt aufweisen,

(ii) eine Mehrzahl Andrückeinrichtungen (15—17), wobei eine Andrückeinrichtung flexibel mit jedem Arbeitswerkzeug (18) so verbunden ist, daß die konkaven Oberflächen der Werkzeuge auf dem Rohr zentriert und zwangsweise mit der äußeren Umfangsfläche des Rohres in Berührung gebracht werden, und

(iii) einen die Andrückvorrichtungen tragenden Rahmen (14) umfaßt.

3. Vorrichtung nach Anspruch 2, dadurch gekennzeichnet, daß eine Mehrzahl Arbeitswerkzeuge in Längsrichtung auf dem Rohr angeordnet ist.

**Revendications**

1. Procédé de traitement d'un élément revêtu de résine synthétique, qui consiste à former des inégalités sur la face externe de l'élément révêtu de résine synthétique en mettant la surface en contact avec la surface d'un dispositif ayant des sillons et des crêtes alternés à une température supérieure au point de fusion de la résine, caractérisé en ce que:

(1) le dispositif est un outil de travail chauffé (18), les sillons et crêtes alternés ont chacun une section rectangulaire, et l'élément est un tuyau d'acier, et

(2) la face externe du tuyau est revêtue de béton après avoir été munie des inégalités désirées.

2. Appareil pour former des inégalités sur la face externe d'un tuyau revêtu de résine synthétique (11) lorsqu'on applique le procédé de la revendication 1, caractérisé en ce que cet appareil comprend:

(1) trois jeux d'outils de travail (18) réparties uniformément autour de la périphérie du tuyau, ayant chacun une face concave sous la forme d'une face interne d'une segment cylindrique et comprenant des sillons et des crêtes alternés ayant chacun une section rectangulaire,

(2) plusieurs moyens de poussée (15—17), un moyen de poussée étant relié souplement à chacun des outils de travail (18) de telle sorte que les faces concaves des outils sont centrées sur le tuyau et poussées au contact de la surface circonférentielle externe du tuyau, et

(3) un bâti (14) portant ces moyens de poussée.

3. Appareil suivant la revendication 2, dans lequel plusieurs de ces outils de travail sont disposés sur la longueur du tuyau.

FIG. 1

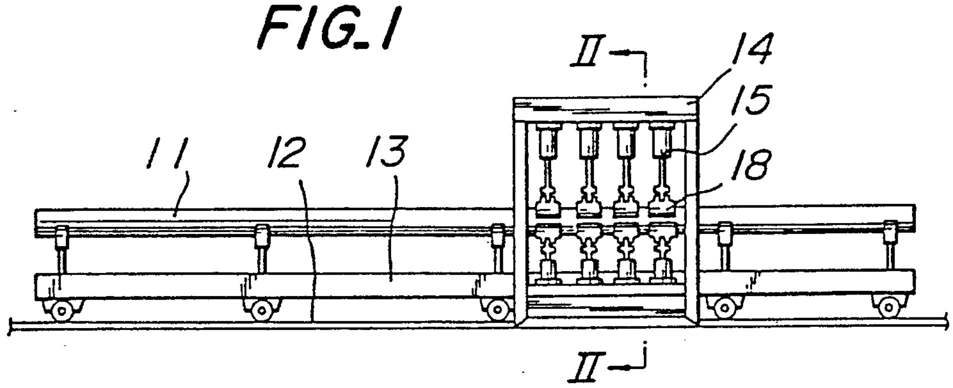


FIG. 2

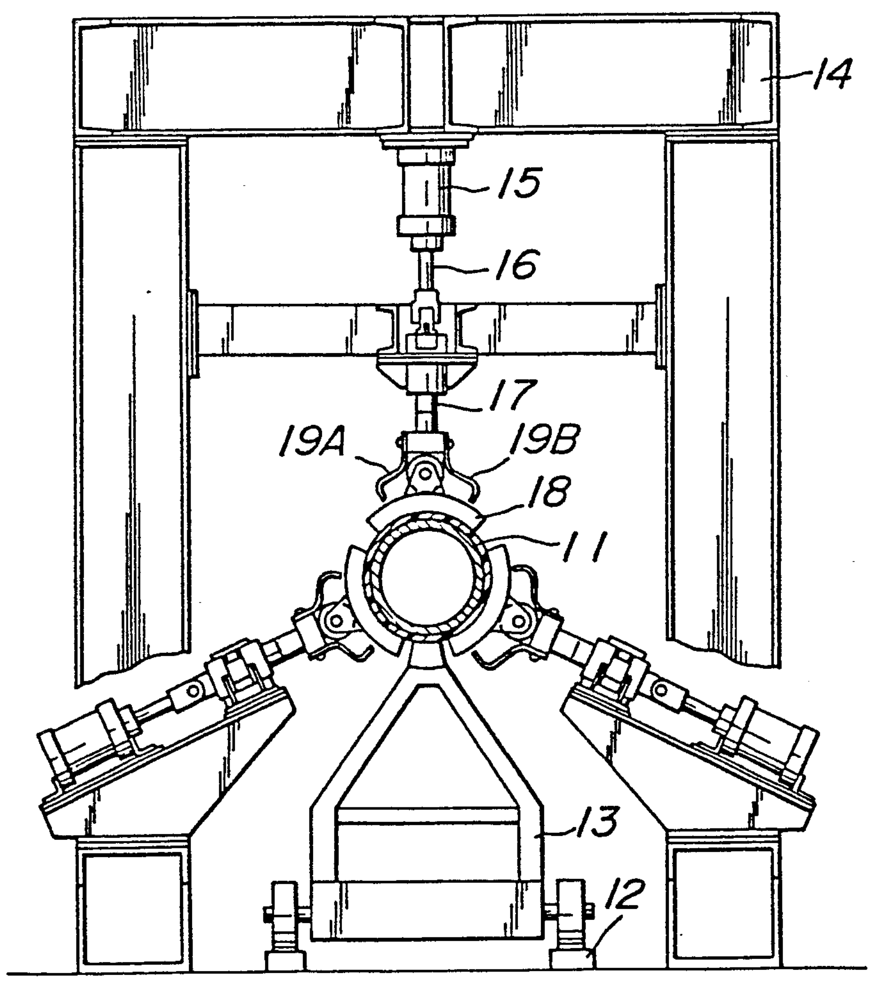

FIG_3

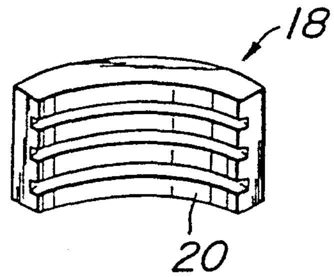


FIG_4

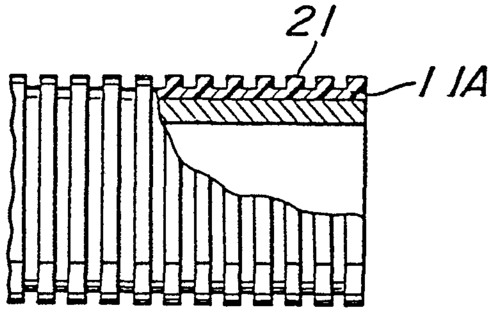


FIG_5